# EUROPEAN PATENT SPECIFICATION

(11) **EP 1 674 320 B1**
(45) Date of publication and mention of the grant of the patent: **20.02.2008**
(21) Application number: 05077899.2
(22) Date of filing: 19.12.2005
(51) Int. Cl.: B60K 23/08, B60K 17/35

(54) **Power transfer device for a four-wheel drive vehicle**
Kraftübertragungseinrichtung für einen Vierradantrieb
Dispositif de transmission pour véhicule à quatre roues motrices

(30) Priority: 22.12.2004 JP 2004372166
(43) Date of publication of application: 28.06.2006
(73) Proprietor: Fuji Jukogyo Kabushiki Kaisha, Tokyo 160-0023 (JP)
(72) Inventor: Masuya, Kouichi, Fuji Jukogyo Kabushiki Kaisha, Shinjuku-ku Tokyo 160-0023 (JP); Oki, Takatsugu, Fuji Jukogyo Kabushiki Kaisha, Shinjuku-ku Tokyo 160-0023 (JP); Kuji, Tokuju, Fuji Jukogyo Kabushiki Kaisha, Shinjuku-ku Tokyo 160-0023 (JP)
(74) Representative: Dunleavy, Kevin James

(56) References cited:
- EP-A- 0 275 463
- EP-A- 0 546 733
- EP-A- 1 508 466
- WO-A-20/05080116
- DE-A1- 3 814 435
- US-A- 5 234 091
- PATENT ABSTRACTS OF JAPAN vol. 010, no. 357 (M-540), 2 December 1986 (1986-12-02) & JP 61 155027 A (MAZDA MOTOR CORP), 14 July 1986 (1986-07-14)

## Description

### BACKGROUND OF THE INVENTION

### 1. Field of the Invention

The present invention relates to a power transfer device that transfers power to the front and rear wheels of a four-wheel drive vehicle.

### 2. Description of the Related Art

In recent years, four-wheel drive vehicles equipped with a mechanism to transfer power to both the front and rear wheels are rapidly gaining popularity. This mechanism helps enhance steering stability and rough road running ability of the vehicle. There are mainly two methods to construct such a power transfer mechanism: one is a part time method wherein the front and rear wheels are mechanically directly connected; and the other is a full time method wherein the front and rear wheels are connected through a differential system or a coupling.

In the part time method, it is difficult to reduce the effect arising from the difference in rotation speed between the front and rear wheels, thereby causing, so called, a tight corner braking phenomenon, which leads to tire wear and low gas mileage. On the other hand, in the full time method, a differential system including planetary gears and the like is utilized, making it possible to absorb the difference in rotation speed between the front and rear wheels, and thus to drive the wheels smoothly. However, even in the full time method, when one set of the driving wheels slip, the driving torque transferred to the other set of the driving wheels decreases, thereby degrading the vehicle's running ability.

The above problem has led to the development of a power transfer device wherein variable control is provided to give a torque distribution ratio of 50:50 between the front and rear wheels by engaging a clutch system depending on the driving state, the clutch system limiting the movement of the differential system. With the power transfer as above, even when one set of the driving wheels slip, the driving torque transferred to the other set does not necessarily decrease. Therefore, it is possible to enhance rough road running ability of a four-wheel drive vehicle.

However, in the conventional power transfer mechanism, the torque distribution ratio is variably controlled between the torque distribution ratio determined based on the structure of the differential system and the torque distribution ratio of 50:50 obtained by limiting the movement of the differential system. Thus, the power characteristics of a front-wheel drive vehicle, where more torque is distributed to the front wheels, cannot coexist with those of a rear-wheel drive vehicle, where more torque is distributed to the rear wheels. That is, it is not possible to distribute more torque to only one of the two sets of the driving wheels by engaging the clutch system, because the mechanism is such that engaging the clutch system equilibrates the driving torque between the two sets of the driving wheels.

In order to enhance straight drive stability, it is preferable to obtain the power characteristics of a front-wheel drive vehicle by distributing the driving torque more to the front wheels. On the other hand, in order to enhance acceleration performance, it is preferable to obtain the power characteristics of a rear-wheel drive vehicle by distributing the driving torque more to the rear wheels. Therefore, it is necessary to obtain the power characteristics of either a front- or a rear-wheel drive vehicle depending on the running state in order to improve running performance of a four-wheel drive vehicle.

Examples of prior art power transfer devices are provided by JP 5263880 or JP 61155027.

### SUMMARY OF THE INVENTION

In view of the above situation, the objective of the present invention is to provide a power transfer device that may enhance running performance of a vehicle by variably controlling the torque distribution ratio between the front and rear wheels.

According to the present invention, there is provided a power transfer device for a four-wheel drive vehicle for transferring power to front and rear wheels, comprising: a transmission output shaft for receiving the power which has been varied through a transmission system; a front wheel output shaft provided between the front wheels and the transmission output shaft for transferring the power to the front wheels; a rear wheel output shaft provided between the rear wheels and the transmission output shaft for transferring the power to the real wheels; a front wheel clutch provided between the transmission output shaft and the front wheel output shaft, the front wheel clutch being capable of switching between an engagement state for transferring the power and an open state for cutting off the power; and a rear wheel clutch provided between the transmission output shaft and the rear wheel output shaft, the rear wheel clutch being capable of switching between an engagement state for transferring the power and an open state for cutting off the power. The power transfer device includes a control unit for adjusting an engagement force off each of the front wheel clutch and the rear wheel clutch, which performs feedback control of the engagement force of each of the front wheel clutch and the real wheel clutch based on a sliding state of each of the front wheel clutch and the rear wheel clutch, respectively, and detects the sliding state of the front wheel clutch while the rear wheel clutch is in the open state and the sliding state of the rear wheel clutch while the front wheel clutch is in the open state.

It is preferable that one of the front wheel output shaft and the rear wheel output shaft is provided coaxially with the transmission output shaft and the other is provided in parallel with the transmission output shaft.

It is preferable that a transmission gear is provided for a clutch drum of each of the front and rear wheel clutches, and the transmission gears are engaged with each other.

It is preferable that feedback control of engagement force of the front wheel clutch is performed based on the difference in rotation speed between the transmission output shaft and the front wheel output shaft, and feedback control of engagement force of the rear wheel clutch is performed based on the difference in rotation speed between the transmission output shaft and the rear wheel output shaft.

By providing the front and rear wheel clutches according to the present invention, the distribution ratio of the driving torque between the front wheels and the rear wheels can be adjusted freely. For example, by distributing more torque to the front wheels, the straight drive stability of the vehicle can be enhanced. On the other hand, by distributing more torque to the rear wheels, the acceleration performance of the vehicle can be enhanced. In short, since it is possible to obtain two different running characteristics back to back as above, the running performance of the vehicle can be drastically improved by the present invention.

Those skilled in the art will appreciate these and other advantages and benefits of various embodiments of the invention upon reading the following detailed description of the preferred embodiments with reference to the below-listed drawings.

### BRIEF DESCRIPTION OF THE DRAWINGS

FIG. 1 is a schematic diagram showing a four-wheel drive vehicle provided with a power transfer device according to one embodiment of the present invention.
FIG. 2 is a skeleton diagram conceptually showing the power transfer device in FIG. 1.
FIG. 3 shows a cross-sectional view of the range A in FIG. 2.
FIG. 4 is a block diagram showing a control system of the power transfer device.
FIG. 5 is a flowchart showing an example of clutch engagement control executed by the control unit.
FIG. 6 is a skeleton diagram conceptually showing the power transfer device according to another embodiment of the present invention.
FIG. 7 shows a cross-sectional view of the range A in FIG. 6.

### DETAILED DESCRIPTION OF THE PREFERRED EMBODIMENTS

Embodiments of the present invention are described below with reference to the accompanying drawings to facilitate understanding of the present invention.

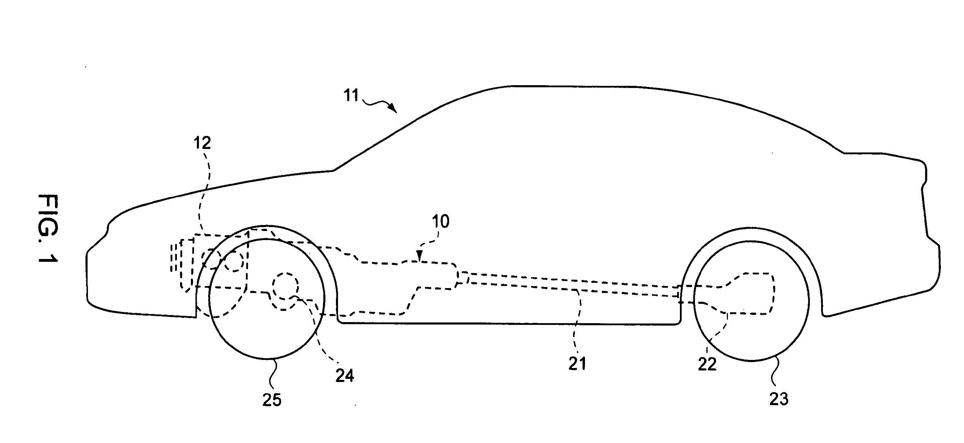

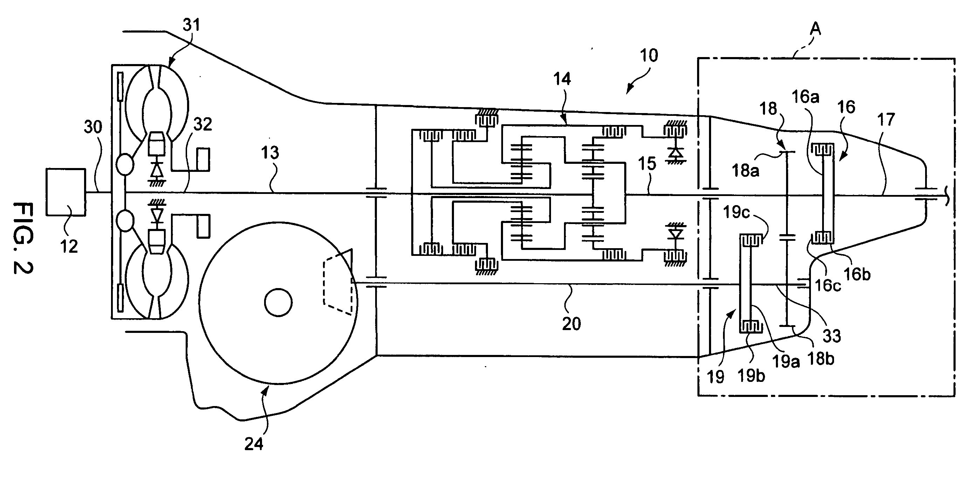

As shown in FIGs. 1 and 2, a power transfer device 10 is mounted longitudinally on a four-wheel drive vehicle 11. The power transfer device 10 includes a transmission input shaft 13, which is connected to an engine 12, and a transmission output shaft 15, which is connected to the transmission input shaft 13 through a transmission system 14. The transmission output shaft 15 is connected to a rear wheel output shaft 17 through a rear wheel clutch 16, and to a front wheel output shaft 20 through a gear array 18 and a front wheel clutch 19. The engine power varied at the transmission system 14 is transferred through the rear wheel output shaft 17, a propeller shaft 21, and a rear differential system 22 to a rear wheel 23. It is also transferred through the front wheel output shaft 20 and a front differential system 24 to a front wheel 25. In short, the engine power is distributed through the power transfer device 10 to the front wheel 25 and the rear wheel 23 of the four-wheel drive vehicle 11.

As shown in FIG. 2, a crankshaft 30 of the engine 12 is connected to a torque converter 31. A turbine shaft 32 of the torque converter 31 is connected to one end of the transmission input shaft 13. The other end of the transmission input shaft 13 is connected to the transmission system 14, which comprises planetary gear arrays, clutches and brakes. By controlling the clutches and brakes in the transmission system 14, the transfer path between the transmission input shaft 13 and the transmission output shaft 15 can be changed so as to vary the engine power transferred therethrough.

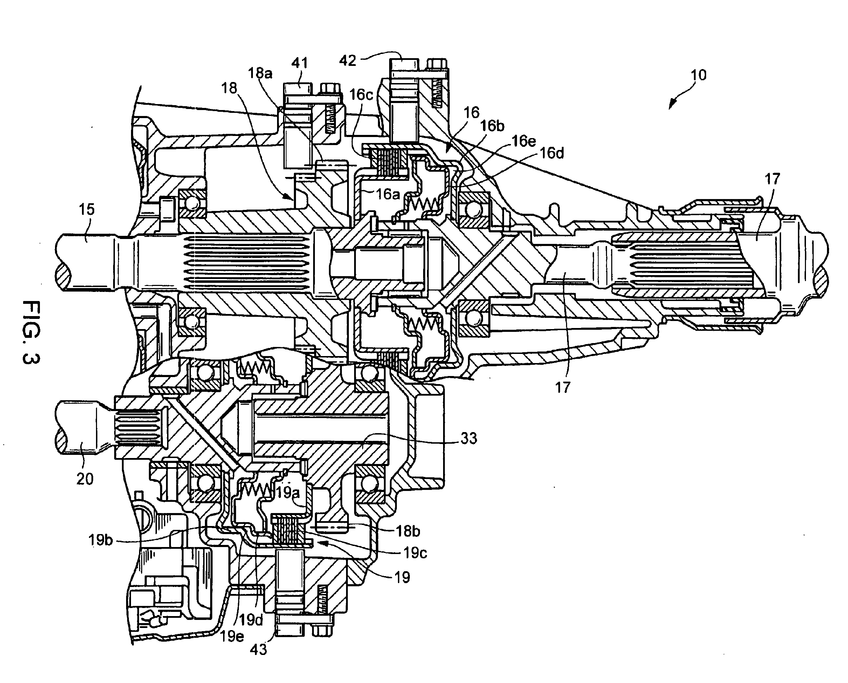

Between the transmission output shaft 15 and the rear wheel output shaft 17, which is provided coaxially therewith, the rear wheel clutch 16 is mounted for distributing the power to the rear wheel 23. As shown in FIG. 3, the rear wheel clutch 16 comprises a clutch hub 16a, which is attached to the transmission output shaft 15, and a clutch drum 16b, which is attached to the rear wheel output shaft 17. A plurality of clutch plates 16c are inserted between the clutch hub 16a and the clutch drum 16b. A hydraulic piston 16d is housed in the clutch drum 16b. When the hydraulic oil is supplied to a hydraulic chamber 16e, which is a compartment surrounded by the hydraulic piston 16d and the clutch drum 16b, the clutch plates 16c are pressed from 5 both sides, and the rear wheel clutch 16 is engaged. On the other hand, when the hydraulic oil is discharged from the hydraulic chamber 16e, the clutch plates 16c are released from the pressure, and the rear wheel clutch 16 is released.

A drive gear 18a is attached to the transmission output shaft 15. A driven gear 18b, which is engaged with the drive gear 18a, is attached to a intermediate shaft 33, which is in parallel with the transmission output shaft 15. The front wheel clutch 19 is provided between the intermediate shaft 33 and the front wheel output shaft 20 for distributing the power to the front wheel 25. Similar to the aforesaid rear wheel clutch 16, the front wheel clutch 19 comprises a clutch hub 19a, which is attached to the intermediate shaft 33, and a clutch drum 19b, which is attached to the front wheel output shaft 20. A plurality of clutch plates 19c are inserted between the clutch hub 19a and the clutch drum 19b. A hydraulic piston 19d is housed in the clutch drum 19b. When the hydraulic oil is supplied to a hydraulic chamber 19e, which is a compartment surrounded by the hydraulic piston 19d and the clutch drum 19b, the clutch plates 19c are pressed from both sides, and the front wheel clutch 19 is engaged. On the other hand, when the hydraulic oil is discharged from the hydraulic chamber 19e, the clutch plates 19c are released from the pressure, and the front wheel clutch 19 is released.

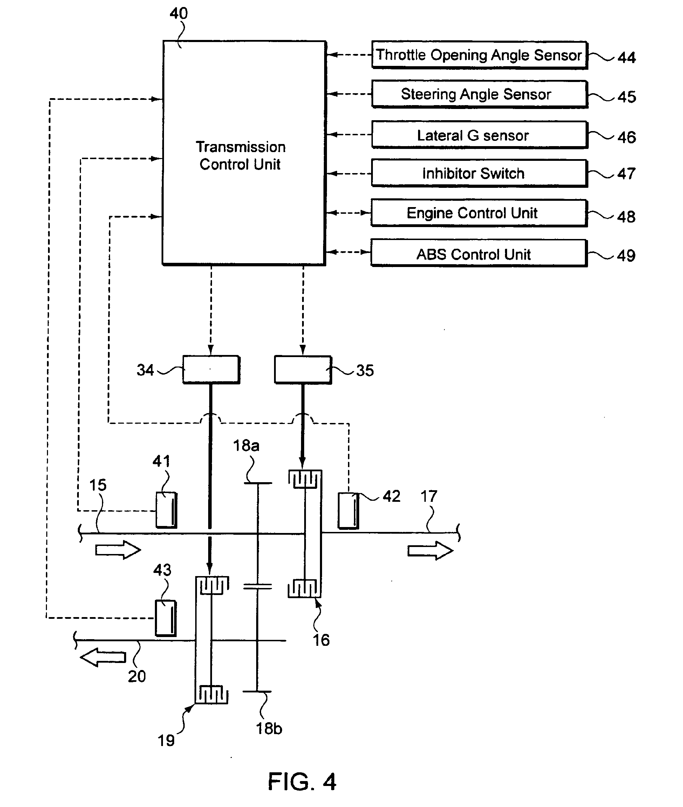

FIG. 4 is a block diagram showing the control system of the power transfer device 10. The control system in this figure is for controlling the front wheel clutch 19 and the rear wheel clutch 16. The hydraulic oil is supplied to the front wheel clutch 19 after the hydraulic pressure is adjusted through a pressure control valve 34. Similarly, the hydraulic oil is supplied to the rear wheel clutch 16 after the hydraulic pressure is adjusted through a pressure control valve 35. These pressure control valves 34 and 35 are electromagnetic control valves, which receive control signals from a transmission control unit 40 (hereinafter referred to as a control unit) to adjust the hydraulic pressures for controlling the engagement forces of the clutches 19 and 16 respectively.

A variety of sensors are attached to the control unit 40. Based on the signal inputted from each sensor, the control unit 40 sets the engagement forces of the front wheel clutch 19 and the rear wheel clutch 16, and correspondingly adjusts the hydraulic pressures. These sensors include: a transmission rotation speed sensor 41, which detects the number of rotations per unit time of the transmission output shaft 15, a rear wheel rotation speed sensor 42, which detects the number of rotations per unit time of the rear wheel output axel 17, a front wheel rotation speed sensor 43, which detects the number of rotations per unit time of the front wheel output shaft 20, a throttle opening angle sensor 44, which detects the throttle opening angle Th of the throttle valve, a steering angle sensor 45, which detects the steering angle θ of the steering wheel, a lateral G sensor 46, which detects the lateral acceleration (lateral G) of the vehicle, an inhibitor switch 47, which detects the shift position, an engine control unit 48, which detects parameters associated with the engine such as the engine rotation speed, and an ABS control unit 49, which detects the operating conditions of the ABS (Anti-lock Brake System). In addition, the control unit 40 detects the state of the vehicle based on the signal inputted from each sensor, and controls the engagement of the front wheel clutch 19 and the rear wheel clutch 16 by executing the control program stored therein. The control unit 40 comprises a CPU, which computes various control signals, a ROM, which stores various control data and programs, and a RAM, which provides temporary data storage.

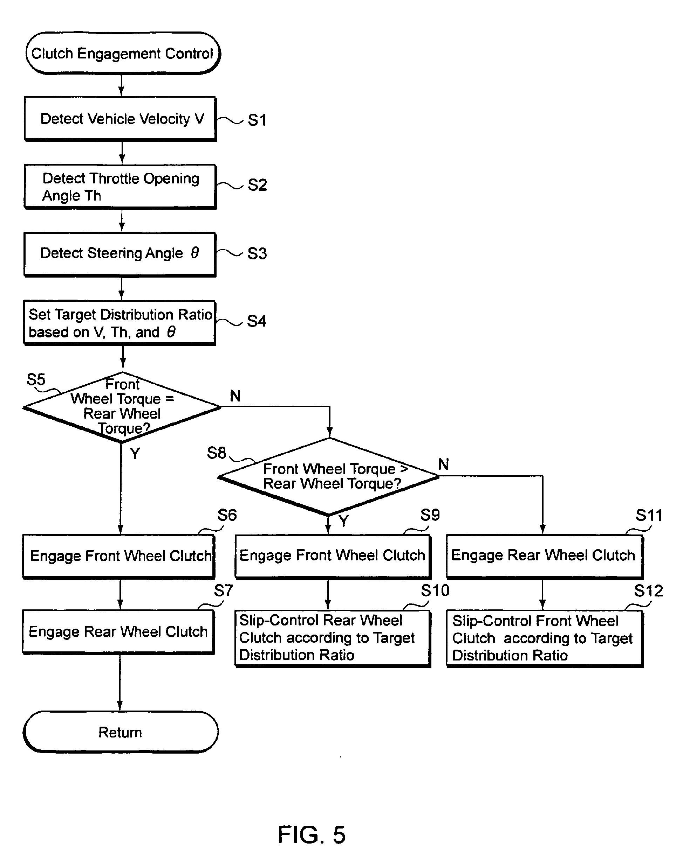

The engagement control of the front and rear wheel clutches 19 and 16 is explained below. FIG. 5 is a flowchart showing an example of the clutch engagement control executed by the control unit 40. In the step S1, the vehicle velocity V is detected based on the signals from the front wheel rotation speed sensors 43 and/or the rear wheel rotation speed sensors 42. In the step S2, the throttle opening angle Th is detected based on the signal from the throttle opening angle sensor 44. In the step S3, the steering angle θ is detected based on the signal from the steering angle sensor 45. In the step S4, a target distribution ratio, which is a target torque ratio between the front wheel 25 and the rear wheel 23, is set based on the vehicle velocity V, the throttle opening angle Th, and the steering angel θ by referring to a predetermined distribution ratio map. That is, the running state of the vehicle is captured based on the vehicle velocity V, the throttle opening angle Th, and the steering angel θ, and the target distribution ratio corresponding to the state is set. The vehicle velocity V can be obtained from the rotation speed of the front wheel output shaft 20 or the rear wheel output shaft 17, or by calculating the average of the two rotation frequencies. The distribution ratio map is prepared by conducting experiments and/or simulations beforehand.

In the step S5, it is determined if the front wheel torque and the rear wheel torque are equal. Note that the front and rear wheel torque have been obtained based on the target distribution ratio as above. If they are equal, that is, if the target distribution ratio of the driving torque between the front and rear wheels is 50:50, the steps S6 and S7 are executed to have both the front wheel clutch 19 and the rear wheel clutch 16 engaged. Incidentally, the hydraulic pressure may be adjusted depending on the engine torque as well as on the transmission state when the front and rear clutches 19 and 16 are being engaged.

On the other hand, if it is determined in the step S5 that the front and rear wheel torque are not equal, the process goes to the step S8 to determine if the front wheel torque is greater than the rear wheel torque. If the front wheel torque is greater than the rear wheel torque, that is, if the running characteristics of a front-wheel drive vehicle are to be obtained, the front wheel clutch 19 is engaged in the step S9 and the rear wheel clutch 16 is slip-controlled based on the target distribution ratio in the step S10. In other words, the torque distribution ratio between the front wheel 25 and the rear wheel 23 can be varied between 100:0 and 50:50 by slip-controlling the rear wheel clutch 16 while engaging the front wheel clutch 19 completely.

If it is determined in the step S8 that the rear wheel torque is greater than or equal to the front wheel torque, that is, if the running characteristics of a rear-wheel drive vehicle are to be obtained, the rear wheel clutch 16 is engaged in the step S11 and the front wheel clutch 19 is slip-controlled based on the target distribution ratio in the step S12. In other words, the torque distribution ratio between the front wheel 25 and the rear wheel 23 can be varied between 0:100 and 50:50 by slip-controlling the front wheel clutch 19 while engaging the rear wheel clutch 16 completely.

As seen above, by providing the front wheel clutch 19 and the rear wheel clutch 16, the distribution ratio of the driving torque between the front wheel 25 and the rear wheel 23 can be adjusted freely. For example, by distributing more torque to the front wheel 25, the straight drive stability of the vehicle can be enhanced. On the other hand, by distributing more torque to the rear wheel 23, the acceleration performance of the vehicle can be enhanced. In short, since it is possible to obtain two different running characteristics back to back as seen thus far, the running performance of the vehicle can be drastically improved by the present invention.

In order to carry out the engagement control irrespective of the long-term degradation of the front and rear wheel clutches 19 and 16, the control unit 40 detects the sliding state of each of the front and rear wheel clutches 19 and 16, and controls the hydraulic pressure for each of them depending on the sliding state. In general, when there is a difference in rotation speed between the transmission output shaft 15 and the front wheel output shaft 20 under the condition that the hydraulic pressure was supplied so as to completely engage the front wheel clutch 19, sliding of the front wheel clutch 19 will be generated. In this case, the hydraulic pressure for the front wheel clutch 19 may be increased to eliminate the sliding of the front wheel clutch 19. Similarly, by observing the difference in rotation speed between the transmission output shaft 15 and the rear wheel output shaft 17 as well as the hydraulic pressure for the rear wheel clutch 16, sliding of the rear wheel clutch 16 may be detected and the hydraulic pressure may be adjusted to eliminate the sliding.

As seen above, not only the control precision may be enhanced, but also the response to the change in the torque distribution ratio may be improved, by means of the feedback control of the hydraulic pressure for the front wheel clutch 19 or the rear wheel clutch 16 based on the sliding state. Incidentally, while the sliding state of the front wheel clutch 19 is being detected, the rear clutch 16 is in the open state; and while the sliding state of the rear clutch 16 is being detected, the front wheel clutch 19 is in the open state.

When the vehicle needs to be towed, these two clutches 16 and 19 may be put into the open state. Thus, it is possible to prevent burning of the planetary gears, brakes, clutches, rotation shafts, shafts, and so on, which are included in the transmission system 14, since the driving force inputted from the front wheel 25 or the rear wheel 23 bypasses the transmission system 14 when the clutches 16 and 19 are open. As for the procedure for releasing the clutches 16 and 19 before towing, they may be put into the open state when the wheel velocity exceeds a predetermined value even if the select lever is in the N range. Alternatively, the driver may manually put the clutches into the open state.

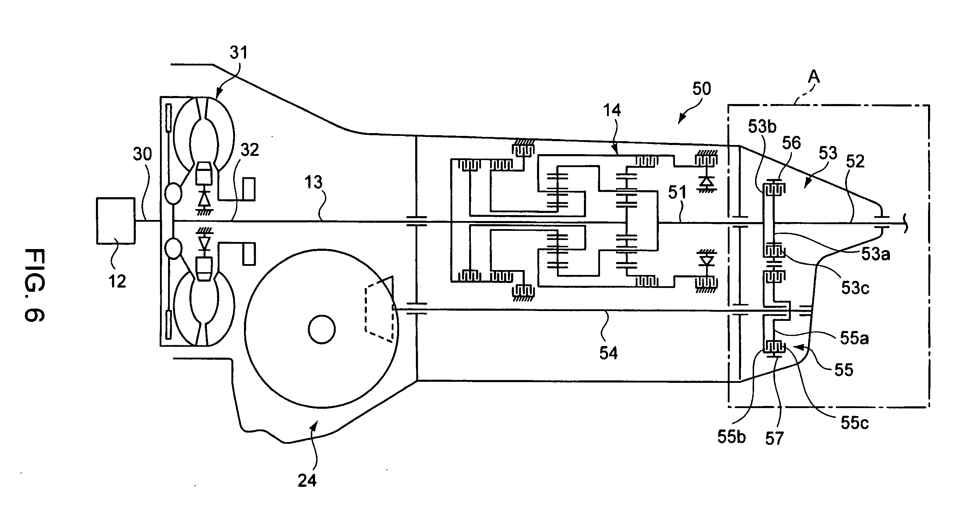

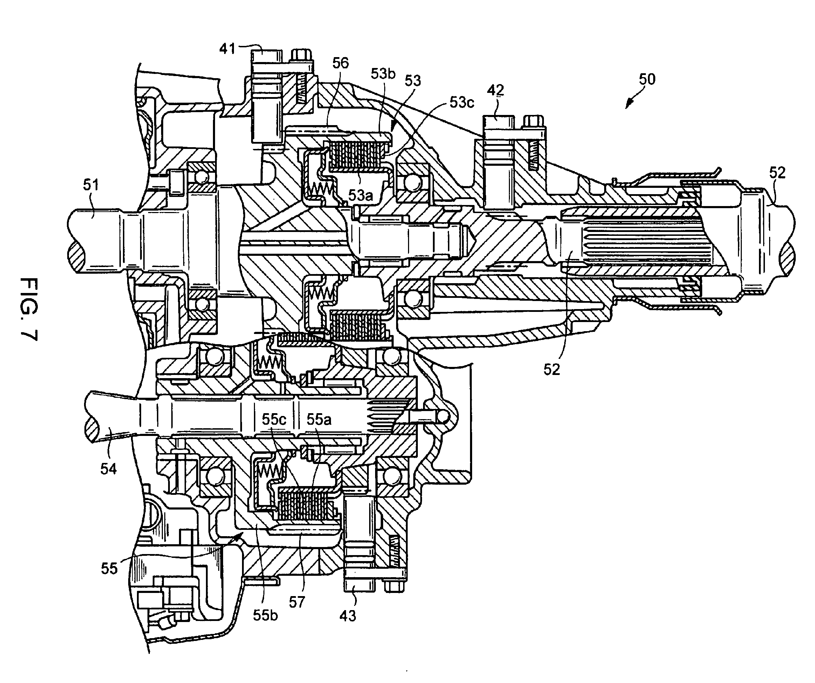

Described below is a power transfer device 50 according to another embodiment in the present invention. FIG. 6 is a schematic skeleton diagram of the power transfer device 50. FIG. 7 shows a cross-sectional view of the range A in FIG. 6. The same reference numerals are used for the parts identical to those in FIGs. 2 and 3, and the explanations of those parts are omitted.

As shown in FIGs. 6 and 7, between a transmission output shaft 51 and a rear wheel output shaft 52, which is provided coaxially therewith, a rear wheel clutch 53 is mounted. The rear wheel clutch 53 comprises a clutch drum 53b, which is attached to the transmission output shaft 51, and a clutch hub 53a, which is attached to the rear wheel output shaft 52. Between the transmission output shaft 51 and a front wheel output shaft 54, which is provided in parallel therewith, a front wheel clutch 55 is mounted. The front wheel clutch 55 comprises a clutch hub 55a, which is attached to the front wheel output shaft 54, and a clutch drum 55b, which is rotatably supported by the front wheel output shaft 54.

These clutch drums 53b and 55b are provided adjacent to each other. On the outer surface of the clutch drum 53b, which is part of the rear wheel clutch 53, a drive gear 56 is provided as a transmission gear; and on the outer surface of the clutch drum 55b, which is part of the front wheel clutch 55, a driven gear 57 engaged with the drive gear 56 is provided as a transmission gear. In other words, the rear wheel clutch 53 is housed inside the drive gear 56; and the front wheel clutch 55 is housed inside the driven gear 57. Configuring the front wheel clutch 55 and the rear wheel clutch 53 as above eliminates the need for longitudinally placing the rear wheel clutch 53 and the drive gear 56, as well as for longitudinally placing the front wheel clutch 55 and the driven gear 57. Therefore, the longitudinal length of the power transfer device 50 is shortened, thus realizing overall size reduction.

It is to be understood that the above-described embodiments are illustrative of only a few of the many possible specific embodiments which can represent applications of the principles of the invention. Numerous and varied other arrangements can be readily devised by those skilled in the art without departing from the scope of the invention.

For example, the power transfer device 10 or 50 includes the automatic transmission system 14 with planetary gears in the present embodiments. However, an automatic transmission system with parallel shafts, a continuously variable transmission system with a belt or a toroid, or even a manual transmission with parallel shafts may be utilized.

Also, the present embodiments incorporate the friction-type multi-board clutch, which can be switched between the engagement state and the open state through the hydraulic pressure control. However, an electromagnetic clutch may be utilized for the front wheel clutch 19 or 55 or the rear wheel clutch 16 or 53, which can be switched between the engagement state and the open state through the electromagnetic force generated by conducting current through an electromagnetic coil. Furthermore, a single-board clutch may be utilized instead of a multi-board clutch.

## Claims

1. A power transfer device (10) for a four-wheel drive vehicle for transferring power through a transmission system (14) and a transmission output shaft (15) to front and rear wheels, the transmission output shaft (15) receiving the power which has been varied by the transmission system (14), comprising:
a front wheel output shaft (20) provided between the front wheels and the transmission output shaft (15) for transferring the power to the front wheels;
a rear wheel output shaft (17) provided between the rear wheels and the transmission output shaft (15) for transferring the power to the rear wheels;
a front wheel clutch (19) provided between the transmission output shaft (15) and the front wheel output shaft (20), the front wheel clutch (19) being capable of switching between an engagement state for transferring the power and an open state for cutting off the power; a rear wheel clutch (16) provided between the transmission output shaft (15) and the real wheel output shaft (17), the rear wheel clutch (16) being capable of switching between an engagement state for transferring the power and an open state for cutting off the power; and
a control unit (40) for adjusting the engagement force of each of the front wheel clutch (19) and the rear wheel clutch (16), **characterized in that** the control unit performs feedback control of the engagement force of each of the front wheel clutch (19) and the rear wheel clutch (16) based on the sliding state of each of the front wheel clutch (19) and the rear wheel clutch (16), respectively, and the control unit (40) detects the sliding state of the front wheel clutch (l 9) while the rear wheel clutch (16) is in the open state and the control unit (40) detects the sliding state of the rear wheel clutch (16) while the front wheel clutch (19) is in the open state.

2. The power transfer device (10) according to Claim 1, **characterized in that** one of the front wheel output shaft (20) and the rear wheel output shaft (17) is provided coaxially with the transmission output shaft (15) and the other is provided in parallel with the transmission output shaft (15).

3. The power transfer device (50) according to Claim 2, **characterized in that** a transmission gear (57, 56) is provided for a clutch drum (55b, 53b) of each of the front and rear wheel clutches (55, 53), and the transmission gears (57, 56) are engaged with each other

4. The power transfer device (10) according to Claim 1, **characterized in that** the feedback control of the engagement force of the front wheel clutch (19) is performed based on the difference in rotation speed between the transmission output shaft (15) and the front wheel output shaft (20), and the feedback control of the engagement force of the rear wheel clutch (16) is performed based on the difference in rotation speed between the transmission output shaft (15) and the rear wheel output shaft (17).

## Patentansprüche

1. Kraftübertragungsvorrichtung (10) für ein Fahrzeug mit Vierradantrieb zum Übertragen von Kraft über ein Getriebesystem (14) und eine Getriebeabtriebswelle (15) zu Vorder- und Hinterrädern, wobei die Getriebeabtriebswelle (15) die durch das Getriebesystem (14) geänderte Kraft empfängt, mit:
einer zwischen den Vorderrädern und der Getriebeabtriebswelle (15) angeordneten Ausgangswelle (20) für die Vorderräder zum Übertragen von Kraft zu den Vorderrädern;
einer zwischen den Hinterrädern und der Getriebeabtriebswelle (15) angeordneten Ausgangswelle (17) für die Hinterräder zum Übertragen von Kraft zu den Hinterrädern;
einer zwischen der Getriebeabtriebswelle (15) und der Ausgangswelle (20) für die Vorderräder angeordneten Vorderradkupplung (19), wobei die Vorderradkupplung (19) dazu geeignet ist, zwischen einem eingerückten Zustand, in dem Kraft übertragen wird, und einem offenen oder ausgerückten Zustand umzuschalten, in dem die Kraftübertragung unterbrochen ist;
einer zwischen der Getriebeabtriebswelle (15) und der Ausgangswelle (17) für die Hinterräder angeordneten Hinterradkupplung (16), wobei die Hinterradkupplung (16) dazu geeignet ist, zwischen einem eingerückten Zustand, in dem Kraft übertragen wird, und einem offenen oder ausgerückten Zustand umzuschalten, in dem die Kraftübertragung unterbrochen ist; und
einer Steuereinheit (40) zum Einstellen der Einrückkraft der Vorderradkupplung (19) und der Hinterradkupplung (16);
**dadurch gekennzeichnet, dass**
die Steuereinheit eine Rückkopplungssteuerung für die Einrückkraft der Vorderradkupplung (19) und der Hinterradkupplung (16) basierend auf dem Gleitzustand der Vorderradkupplung (19) bzw. der Hinterradkupplung (16) ausführt, wobei die Steuereinheit (40) den Gleitzustand der Vorderradkupplung (19) erfasst, während die Hinterradkupplung (16) auf einen ausgerückten Zustand eingestellt ist, und wobei die Steuereinheit (40) den Gleitzustand der Hinterradkupplung (16) erfasst, während die Vorderradkupplung (19) auf den ausgerückten Zustand eingestellt ist.

2. Vorrichtung (10) nach Anspruch 1, **dadurch gekennzeichnet, dass** die Ausgangswelle (20) für die Vorderräder oder die Ausgangswelle (17) für die Hinterräder koaxial zur Getriebeabtriebswelle (15) und die andere dieser Wellen parallel zur Getriebeabtriebswelle (15) angeordnet ist.

3. Vorrichtung (50) nach Anspruch 2, **dadurch gekennzeichnet, dass** ein Getriebezahnrad (57, 56) für eine Kupplungstrommel (55b, 53b) der Vorderradkupplung bzw. der Hinterradkupplung (55, 53) bereitgestellt wird und die Getriebezahnräder (57, 56) miteinander in Eingriff stehen.

4. Vorrichtung (10) nach Anspruch 1, **dadurch gekennzeichnet, dass** die Rückkopplungssteuerung für die Einrückkraft der Vorderradkupplung (19) basierend auf der Drehzahldifferenz zwischen der Getriebeabtriebswelle (15) und der Ausgangswelle (20) für die Vorderräder ausgeführt wird, und die Rückkopplungssteuerung für die Einrückkraft der Hinterradkupplung (16) basierend auf der Drehzahldifferenz zwischen der Getriebeabtriebswelle (15) und der Ausgangswelle (17) für die Hinterräder ausgeführt wird.

## Revendications

1. Dispositif de transmission (10) pour un véhicule à quatre roues motrices, destiné à transmettre la force motrice aux roues avant et aux roues arrière grâce à un système de transmission (14) et à un arbre de sortie de transmission (15), l'arbre de sortie (15) recevant la force motrice qui a été modifiée par le système de transmission (14), comprenant :
un arbre de sortie pour roues avant (20) qui est prévu entre les roues avant et l'arbre de sortie de transmission (15) afin de transmettre la force motrice aux roues avant ;
un arbre de sortie pour roues arrière (17) qui est prévu entre les roues arrière et l'arbre de sortie de transmission (15) afin de transmettre la force motrice aux roues arrière ;
un embrayage pour roues avant (19) qui est prévu entre l'arbre de sortie de transmission (15) et l'arbre de sortie pour roues avant (20), cet embrayage pour roues avant (19) étant apte à passer d'une position embrayée pour transmettre la force motrice, à une position ouverte pour supprimer celle-ci ;
un embrayage pour roues arrière (16) qui est prévu entre l'arbre de sortie de transmission (15) et l'arbre de sortie pour roues arrière (17), cet embrayage pour roues arrière (16) étant apte à passer d'une position embrayée pour transmettre la force motrice à une position ouverte pour supprimer celle-ci ; et
une unité de commande (40) pour régler la force d'engrenage de l'embrayage pour roues avant (19) et celle de l'embrayage pour roues arrière (16),
**caractérisé en ce que** l'unité de commande effectue une commande à rétroaction de la force d'engrènement de l'embrayage pour roues avant (19) et de celle de l'embrayage pour roues arrière (16) sur la base de l'état de patinage respectif de ceux-ci, et l'unité de commande (40) détecte l'état de patinage de l'embrayage pour roues avant (19) alors que l'embrayage pour roues arrière (16) est en position ouverte, et l'unité de commande (40) détecte l'état de patinage de l'embrayage pour roues arrière (16) alors que l'embrayage pour roues avant (19) est en position ouverte.

2. Dispositif de transmission (10) selon la revendication 1, **caractérisé en ce que** l'arbre de sortie pour roues avant (20) ou l'arbre de sortie pour roues arrière (17) est disposé coaxialement par rapport à l'arbre de sortie de transmission (15), et l'autre est disposé parallèlement audit arbre (15).

3. Dispositif de transmission (50) selon la revendication 2, **caractérisé en ce qu'**une boîte de vitesses (57, 56) est prévue pour un tambour d'embrayage (55b, 53b) de chacun des embrayages pour roues avant et pour roues arrière (55, 5:3), et les boîtes de vitesses (57, 56) s'engrènent mutuellement.

4. Dispositif de transmission (10) selon la revendication 1, **caractérisé en ce que** la commande à rétroaction de la force d'engrènement de l'embrayage pour roues avant (19) est effectuée sur la base de la différence de vitesse de rotation entre l'arbre de sortie de transmission (15) et l'arbre de sortie pour roues avant (20), et la commande à rétroaction de la force d'engrènement de l'embrayage pour roues arrière (16) est effectuée sur la base de la différence de vitesse de rotation entre l'arbre de sortie de transmission (15) et l'arbre de sortie pour roues arrière (17).
